# FASCICULE DE BREVET EUROPEEN

(11) **EP 4 472 035 B1**
(45) Date de publication et mention de la délivrance du brevet: **30.07.2025**
(21) Numéro de dépôt: 24175746.7
(22) Date de dépôt: 14.05.2024
(51) Int. Cl.: H02K 3/18, H02K 55/02, H01F 6/06, H01F 41/04, H02K 11/01

(54) **SYSTÈME DE BOBINE POUR UN MOTEUR SUPRACONDUCTEUR**
SPULENSYSTEM FÜR EINEN SUPRALEITENDEN MOTOR
COIL SYSTEM FOR A SUPERCONDUCTING MOTOR

(30) Priorité: 30.05.2023 FR 2305357
(43) Date de publication de la demande: 04.12.2024
(73) Titulaire: Airbus (S.A.S.), 31700 Blagnac (FR)
(72) Inventeur: COLLE, Alexandre, 31700 BLAGNAC (FR); ABDOUH, Reda, 31700 BLAGNAC (FR)
(74) Mandataire: Airbus-OPS SAS

(56) Documents cités:
- EP-A1- 2 717 278
- CN-A- 114 421 717
- JP-A- 2011 091 892
- US-A1- 2012 019 090

## Description

### DOMAINE TECHNIQUE

La présente invention se rapporte au domaine général des moteurs supraconducteurs et elle porte plus particulièrement sur un système de bobine pour un moteur supraconducteur ainsi que sur un moteur supraconducteur comportant une pluralité de tels systèmes de bobine. L'invention porte également sur un procédé de fabrication d'un tel système de bobine.

### ÉTAT DE LA TECHNIQUE ANTÉRIEURE

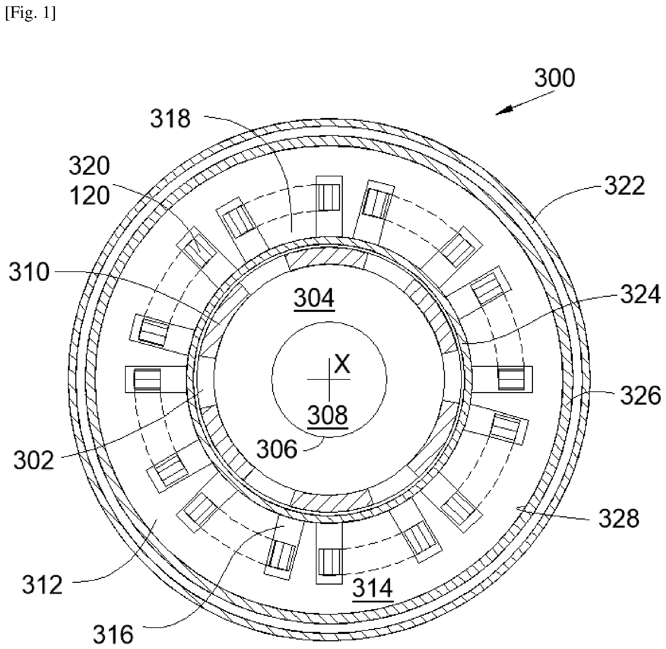

La Fig. 1 montre un moteur supraconducteur 300, où le moteur supraconducteur 300 est vu en coupe par un plan perpendiculaire à l'axe longitudinal X dudit moteur supraconducteur 300. Le moteur supraconducteur 300 comporte un rotor 302 qui présente un cœur de rotor 304 réalisé dans un matériau ferromagnétique tel que l'ensemble des alliages de fer utilisés pour les machines électriques. Le cœur de rotor 304 est cylindrique et coaxial avec l'axe longitudinal X et il présente un alésage central 306 dans lequel est emmanché et fixé rigidement un arbre moteur 308 dudit moteur supraconducteur 300. L'arbre moteur 308 est coaxial avec l'axe longitudinal X.

Le rotor 302 comporte également des aimants permanents 310 fixés au cœur de rotor 304 sur la périphérie de ce dernier. Il y a plusieurs aimants permanents 310 (ici au nombre de six) répartis angulairement et régulièrement autour du cœur de rotor 304 et espacés les uns des autres. Classiquement, les aimants permanents 310 sont magnétisés radialement par rapport à l'axe longitudinal X et de manière alternée de proche en proche.

Le moteur supraconducteur 300 comporte un stator 312 disposé à l'extérieur du rotor 302 et comporte un cœur de stator 314 réalisé dans un matériau ferromagnétique tel que l'ensemble des alliages de fer utilisés pour les machines électriques. Le cœur de stator 314 prend une forme globalement cylindrique coaxiale avec l'axe longitudinal X.

Au niveau de sa face cylindrique qui est orientée vers le rotor 302, le cœur de stator 314 présente des orifices 316, ici en forme de fentes qui débouchent vers le rotor 302. Il y a plusieurs orifices 316 (ici au nombre de seize) répartis angulairement et régulièrement autour du rotor 302. Les orifices 316 sont agencés par paire et les deux orifices 316 de la paire sont séparés par une dent 318 monobloc et monomatière avec le cœur de stator 314.

Pour chaque paire d'orifices 316, le stator 312 comporte une bobine 320 qui est enroulée autour de la dent 318. Chaque bobine 320 est constituée d'un matériau supraconducteur.

Le rotor 302 et le stator 312 sont classiquement logés dans un boîtier moteur 322 qui est cylindrique et fermé à ses deux extrémités par des flancs dont au moins un percé d'un orifice central permettant le passage de l'arbre moteur 308. Le stator 312 est monté fixe à l'intérieur du boîtier moteur 322 tandis que le rotor 302 et l'arbre moteur 308 sont montés libres en rotation à l'intérieur du boîtier moteur 322 par exemple à l'aide de paliers.

En fonctionnement, chaque bobine 320 est alimentée électriquement pour générer un champ magnétique qui interagit avec les aimants permanents 310 pour les entraîner en rotation avec le rotor 302 et l'arbre moteur 308.

Le moteur supraconducteur 300 comporte un cylindre intérieur 324 et un cylindre extérieur 326 qui sont coaxiaux avec l'axe longitudinal X.

Le cylindre intérieur 324 est disposé entre le rotor 302 et le stator 312, et le cylindre extérieur 326 est disposé autour du stator 312 et à l'intérieur du boîtier moteur 322.

Le cylindre intérieur 324 et le cylindre extérieur 326 s'étendent entre les deux flancs auxquels ils sont fixés hermétiquement pour délimiter entre eux et les deux flancs, une chambre 328 dans laquelle est logé le stator 312 et qui peut être mise au vide.

Dans le cadre d'un moteur supraconducteur 300, les bobines 320 doivent être refroidies pour améliorer leur rendement. À cette fin, pour chaque orifice 316, un fluide réfrigérant est injecté dans les orifices 316 pour refroidir les bobines 320.

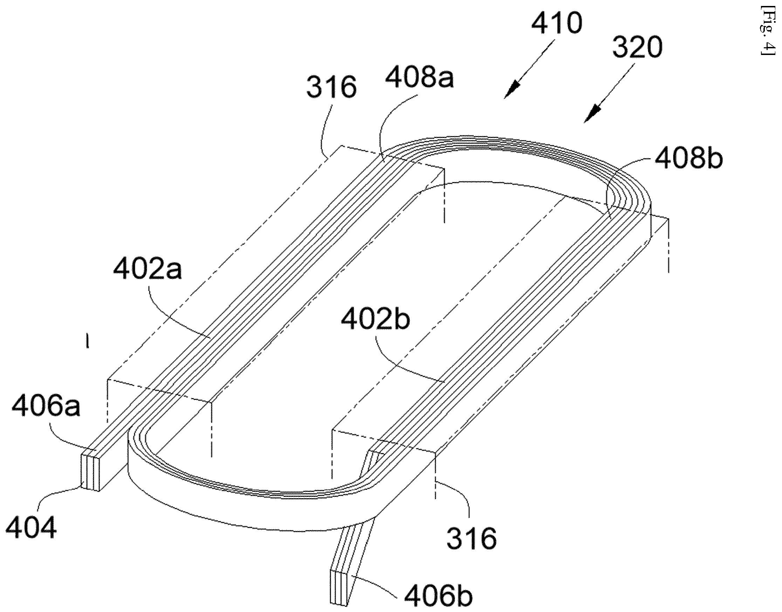

La Fig. 4 montre un exemple d'une bobine 320 de l'état de la technique et installée dans une paire d'orifices 316 ici en traits fantômes.

La bobine 320 est constituée de plusieurs rubans 404, ici au nombre de trois, qui sont accolés les uns contre les autres et enroulés sur eux-mêmes pour former des spires. Chaque ruban 404 est constitué d'un matériau supraconducteur et deux rubans 404 successifs sont électriquement isolés l'un de l'autre par une couche d'un matériau électriquement isolant disposée entre eux.

La bobine 320 comporte une première section 402a rectiligne qui traverse un premier orifice 316 de la paire d'orifices 316, une deuxième section 402b rectiligne qui traverse un deuxième orifice 316 de la paire d'orifices 316.

La première section 402a et la deuxième section 402b présentent chacune une première extrémité 406a-b électriquement connectée à une source d'alimentation électrique et une deuxième extrémité 408a-b.

La bobine 320 comporte également au moins une spire 410 qui relie les deuxièmes extrémités 408a-b entre elles. Chaque spire 410 comporte des sections rectilignes qui traversent un des deux orifices 316 et des sections courbes qui sont à l'extérieur des orifices 316 et relient entre elles les sections rectilignes.

Bien qu'un tel arrangement donne de bons résultats, le passage du courant dans la bobine 320 et le changement de polarité du champ magnétique auquel la bobine 320 est soumise génèrent des pertes et il est donc souhaitable de trouver un arrangement qui limite ces pertes.

Les documents JP2011091892, CN114421717, US2012019090 et EP2717278 illustrent des exemples de l'art antérieur.

### EXPOSÉ DE L'INVENTION

Un objet de la présente invention est de proposer un système de bobine qui peut être mis en place dans un moteur supraconducteur et dont les pertes sont limitées par rapport à l'état de la technique.

À cet effet, est proposé un système de bobine pour un moteur supraconducteur comportant un premier et un deuxième orifices, ledit système de bobine comportant :
- une bobine constituée de plusieurs rubans empilés les uns sur les autres et enroulés de manière à former une première section rectiligne destinée à traverser le premier orifice et présentant une première extrémité et une deuxième extrémité, une deuxième section rectiligne destinée à traverser le deuxième orifice et présentant une première extrémité et une deuxième extrémité, et un enroulement d'au moins une spire reliant les deuxièmes extrémités entre elles et comportant des sous-sections rectilignes destinées à traverser un des deux orifices et des sous-sections courbes destinées à être à l'extérieur des orifices et reliant entre elles les sections et sous-sections rectilignes, et
- pour chaque groupe comportant une section et chaque sous-section rectiligne qui traverse le même orifice, un système de blindage comportant au moins une première bande et au moins une deuxième bande réalisées dans un matériau électriquement supraconducteur, où une première première bande est accolée contre la section ou la sous-section rectiligne de la bobine qui est la plus à l'extérieur, où une première deuxième bande est accolée contre la section ou la sous-section rectiligne de la bobine qui est la plus à l'intérieur de la bobine,

où chaque première extrémité est destinée à être électriquement connectée à une source d'alimentation électrique,
où chaque ruban est constitué d'un matériau supraconducteur,
où deux rubans successifs dans l'empilement sont électriquement isolés l'un de l'autre, et
où chaque bande qui est accolée à un ruban de la bobine est électriquement isolée dudit ruban.

Avec un tel arrangement, les pertes sont réduites.

Avantageusement, il y a plusieurs premières bandes et lesdites premières bandes sont accolées les unes contre les autres de manière à former un empilement qui s'étend vers l'extérieur de la bobine.

Avantageusement, il y a plusieurs deuxièmes bandes et lesdites deuxièmes bandes sont accolées les unes contre les autres de manière à former un empilement qui s'étend vers l'intérieur de la bobine.

Avantageusement, deux bandes accolées l'une à l'autre, sont électriquement isolées l'une de l'autre.

Avantageusement, la bobine et chaque système de blindage sont noyés dans une résine solide.

L'invention propose également un moteur supraconducteur comportant :
- un rotor avec un cœur de rotor portant des aimants permanents et mobile en rotation autour d'un axe longitudinal,
- un stator disposé à l'extérieur du rotor et comportant un cœur de stator traversé par plusieurs paires d'un premier et d'un deuxième orifices répartis angulairement et régulièrement autour du rotor, et
- pour chaque paire d'orifices, un système de bobine selon l'une des variantes précédentes. L'invention propose également un procédé de fabrication d'un système de bobine selon l'invention, ledit procédé de fabrication comportant :
- une première étape de fourniture au cours de laquelle un ensemble de plusieurs rubans empilés les uns sur les autres est fourni,
- une étape d'enroulement au cours de laquelle l'ensemble de rubans ainsi fourni est enroulé sur un mandrin pour former la bobine,
- une étape de retrait au cours de laquelle la bobine est retirée du mandrin,
- une première étape de consolidation au cours de laquelle la bobine est imprégnée d'une résine qui se solidifie,
- une deuxième étape de fourniture au cours de laquelle deux systèmes de blindage sont fournis,
- une étape de mise en place au cours de laquelle chaque système de blindage est mis en place par rapport à la bobine, et
- une deuxième étape de consolidation au cours de laquelle la bobine et les systèmes de blindage ainsi mis en place sont imprégnés d'une résine qui se solidifie.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue en coupe d'un moteur supraconducteur,
[Fig. 2] est une vue en perspective d'un système de bobine selon l'invention,
[Fig. 3] est un schéma représentatif des pertes entre l'état de la technique et l'invention, et
[Fig. 4] est une vue en perspective d'une bobine de l'état de la technique.

### EXPOSÉ DÉTAILLÉ DE MODES DE RÉALISATION

L'architecture d'un moteur supraconducteur selon l'invention est similaire à celle du moteur supraconducteur de la Fig. 1 décrit ci-dessus, et la différence entre les deux moteurs supraconducteurs réside uniquement dans l'arrangement des bobines dans les orifices. Ainsi, le moteur supraconducteur 300 selon l'invention comporte un rotor 302 avec un cœur de rotor 304 portant des aimants permanents 310 et mobile en rotation autour d'un axe longitudinal X, et un stator 312 disposé à l'extérieur du rotor 302 et comportant un cœur de stator 314 traversé par plusieurs paires d'un premier et d'un deuxième orifices 316 répartis angulairement et régulièrement autour du rotor 302.

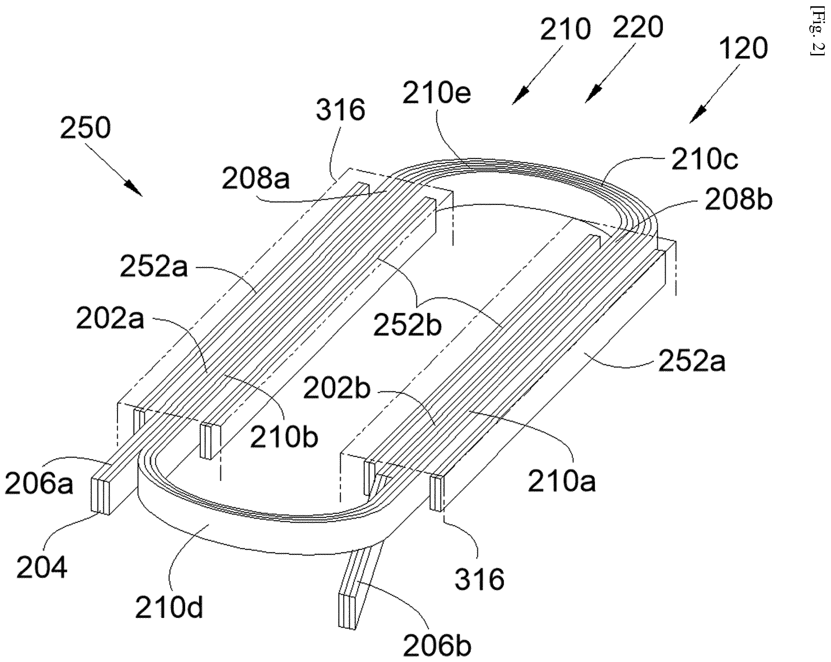

Le moteur supraconducteur 300 selon l'invention comporte donc les mêmes composants que ceux décrits ci-dessus sauf en ce que chaque bobine 320 de l'état de la technique est remplacée par un système de bobine 120 selon l'invention et représenté à la Fig. 2 et qui est installé dans une paire d'orifices 316 du cœur de stator 314 du moteur supraconducteur 300. Le système de bobine 120 comporte une bobine 220 dont la constitution est identique à celle de l'état de la technique. La bobine 220 est ainsi constituée de plusieurs rubans 204 à section rectangulaire, ici au nombre de trois, qui sont accolés par leurs grandes surfaces, les uns contre les autres de manière à former un empilement, et enroulés sur eux-mêmes pour former des spires globalement planes. Chaque ruban 204 est constitué d'un matériau supraconducteur. Deux rubans 204 successifs dans l'empilement sont électriquement isolés l'un de l'autre par une couche d'un matériau électriquement isolant, tel qu'une couche d'un vernis polyimide, disposée entre eux, c'est-à-dire, qu'un matériau électriquement isolant est disposé entre les grandes surfaces en contact des deux rubans 204 successifs.

La bobine 220 comporte une première section 202a rectiligne qui traverse un premier orifice 316 de la paire d'orifices 316, une deuxième section 202b rectiligne qui traverse un deuxième orifice 316 de la paire d'orifices 316.

La première section 202a et la deuxième section 202b présentent chacune une première extrémité 206a-b électriquement connectée à une source d'alimentation électrique et une deuxième extrémité 208a-b. Tous les rubans 204 sont électriquement connectés à la source d'alimentation électrique au niveau de chaque première extrémité 206a-b, c'est-à-dire que le courant traverse tous les rubans 204 de la bobine 220. Les rubans 204 sont ainsi électriquement isolés les uns des autres le long du parcours entre les premières extrémités 206a-b mais électriquement connectés au niveau des premières extrémités 206a-b.

La bobine 220 comporte également un enroulement 210 d'au moins une spire qui relie les deuxièmes extrémités 208a-b entre elles. L'enroulement 210 comporte des sous-sections rectilignes qui traversent un des deux orifices 316 et des sous-sections courbes qui sont à l'extérieur des orifices 316 et relient entre elles les sections et sous-sections rectilignes.

Dans le mode de réalisation de l'invention présenté à la Fig. 2, l'enroulement 210 est à une seule spire et comporte une première sous-section 210a rectiligne qui traverse le deuxième orifice 316, une deuxième sous-section 210b rectiligne qui traverse le premier orifice 316, une troisième sous-section 210c courbe qui relie la deuxième extrémité 208a de la première section 202a à la première sous-section 210a, une quatrième sous-section 210d courbe qui relie la première sous-section 210a à la deuxième sous-section 210b et une cinquième sous-section 210e qui relie la deuxième sous-section 210b à la deuxième extrémité 208b de la deuxième section 202b.

Bien sûr, l'arrangement peut être différent selon le nombre de spires de l'enroulement 210. Le système de bobine 120 comporte également pour chaque orifice 316 traversé par la bobine 220, un système de blindage 250. En d'autres termes, pour chaque groupe comportant une section 202a-b et chaque sous-section 210a-b rectiligne qui traverse le même orifice 316 que ladite section 202a-b, le système de bobine 120 comporte un système de blindage 250.

Le système de blindage 250 comporte au moins une première bande 252a et au moins une deuxième bande 252b, où chaque bande 252a-b est réalisée dans un matériau électriquement supraconducteur, comme un matériau métallique, et plus particulièrement dans le même matériau supraconducteur que les rubans 204 de la bobine 220.

Une première première bande 252a est accolée par sa grande surface contre la grande surface de la section rectiligne ou de la sous-section rectiligne de la bobine 220 qui est la plus à l'extérieur de la bobine 220. Ici, il y a une première première bande 252a accolée contre la première section 202a et une première première bande 252a accolée contre la première sous-section 210a.

Lorsqu'il y a plusieurs premières bandes 252a, les autres premières bandes 252a sont accolées par leurs grandes surfaces contre la grande surface de la première première bande 252a accolée à la bobine 220 et de l'autre côté de ladite première première bande 252a par rapport à la bobine 220 de manière à former un empilement qui s'étend vers l'extérieur de la bobine 220.

Une première deuxième bande 252b est également accolée par sa grande surface contre la grande surface de la section rectiligne ou de la sous-section rectiligne de la bobine 220 qui est la plus à l'intérieur de la bobine 220. Ici, il y a une première deuxième bande 252b accolée contre la deuxième section 202b et une première deuxième bande 252b accolée contre la deuxième sous-section 210b.

Lorsqu'il y a plusieurs deuxièmes bandes 252b, les autres deuxièmes bandes 252b sont accolées par leurs grandes surfaces contre la grande surface de la première deuxième bande 252b accolée à la bobine 220 et de l'autre côté de ladite première deuxième bande 252b par rapport à la bobine 220 de manière à former un empilement qui s'étend vers l'intérieur de la bobine 220.

Les bandes 252a-b sont ainsi de part et d'autre des éléments rectilignes formant la bobine 220. Sur la Fig. 2, les bandes 252a-b sont écartées de la bobine 220 pour faciliter la visibilité, mais elles sont normalement serrées contre la bobine 220.

Chaque bande 252a-b qui est accolée à un ruban 204 de la bobine 220 est électriquement isolée dudit ruban 204 par la mise en place d'une couche d'un matériau électriquement isolant, tel qu'une couche d'un vernis polyimide, entre eux.

Aucune des bandes 252a-b n'est électriquement connectée à la source d'alimentation électrique et elles forment ainsi un blindage autour des éléments de la bobine 220 qui sont dans les orifices 316.

La mise en place des systèmes de blindage 250 permet de dissocier les pertes dues au passage du courant dans la bobine 220 et le changement de polarité du champ magnétique auquel la bobine 220 est soumise. Les bandes 252a-b interagissent avec le champ magnétique et absorbent les pertes par hystérésis.

Selon un mode de réalisation particulier, lorsque deux bandes 252a-b sont accolées l'une à l'autre, elles sont électriquement isolées l'une de l'autre, par exemple par la mise en place d'une couche d'un matériau électriquement isolant entre elles.

Selon un mode de réalisation particulier, chaque bande 252a-b s'étend au maximum sur la longueur de l'orifice 316.

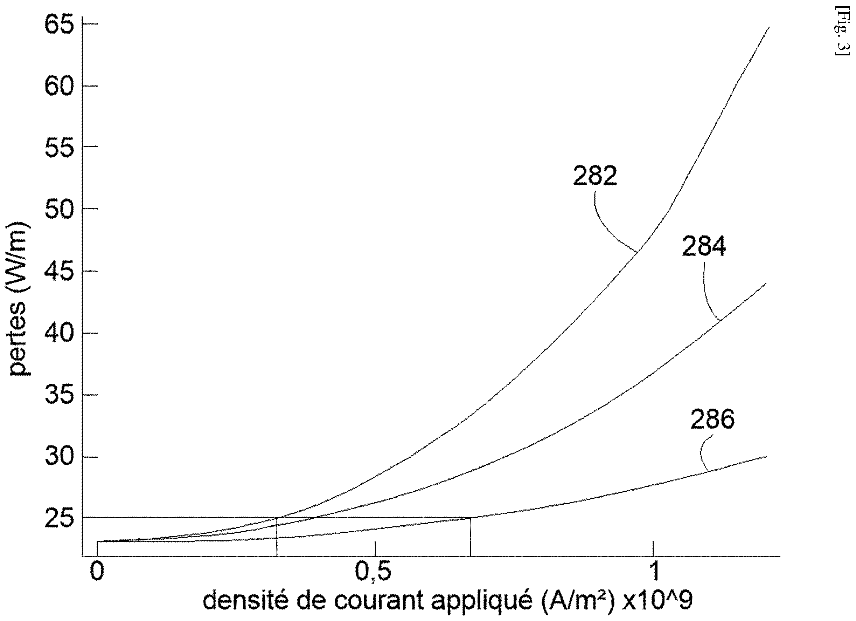

La Fig. 3 montre des courbes représentatives des pertes en fonction du courant appliqué. La courbe 282 est représentative d'une bobine de l'état de la technique, c'est-à-dire sans les systèmes de blindage 250. La courbe 284 est représentative d'une bobine selon l'invention, où chaque système de blindage 250 comporte deux premières bandes 252a et deux deuxièmes bandes 252b par orifice 316. La courbe 286 est représentative d'une bobine selon l'invention où chaque système de blindage 250 comporte trois premières bandes 252a et trois deuxièmes bandes 252b par orifice 316.

La Fig. 3 montre donc que le nombre de bandes 252a-b influe sur les pertes. En particulier, pour un même niveau de perte de 25 W/m, le courant est plus que doublé entre l'état de la technique et l'invention avec six bandes 252a-b.

Avec un tel arrangement, il est possible de remplacer certains rubans 204 par des bandes 252a-b sans augmenter l'encombrement.

Un exemple d'un procédé de fabrication d'un système de bobine 120 selon l'invention comporte :
- une première étape de fourniture au cours de laquelle un ensemble de plusieurs rubans 204 empilés les uns sur les autres est fourni,
- une étape d'enroulement au cours de laquelle l'ensemble de rubans 204 ainsi fourni est enroulé sur un mandrin pour former la bobine 220,
- une étape de retrait au cours de laquelle la bobine 220 est retirée du mandrin,
- une première étape de consolidation au cours de laquelle la bobine 220 est imprégnée d'une résine qui se solidifie afin de rigidifier ladite bobine 220,
- une deuxième étape de fourniture au cours de laquelle deux systèmes de blindage 250 sont fournis,
- une étape de mise en place au cours de laquelle chaque système de blindage 250 est mis en place par rapport à la bobine 220, et
- une deuxième étape de consolidation au cours de laquelle la bobine 220 et les systèmes de blindage 250 ainsi mis en place sont imprégnés d'une résine qui se solidifie afin de rigidifier le système de bobine 120.

La résine est imprégnée sous forme liquide et la solidification intervient postérieurement à l'imprégnation.

La résine utilisée est par exemple une résine epoxy, la bobine 220 et chaque système de blindage 250 sont ainsi noyés dans une résine solide.

## Revendications

1. Système de bobine (120) pour un moteur supraconducteur (300) comportant un premier et un deuxième orifices (316), ledit système de bobine (120) comportant :
- une bobine (220) constituée de plusieurs rubans (204) empilés les uns sur les autres et enroulés de manière à former une première section (202a) rectiligne destinée à traverser le premier orifice (316) et présentant une première extrémité (206a) et une deuxième extrémité (208a), une deuxième section (202b) rectiligne destinée à traverser le deuxième orifice (316) et présentant une première extrémité (206b) et une deuxième extrémité (208b), et un enroulement (210) d'au moins une spire reliant les deuxièmes extrémités (208a-b) entre elles et comportant des sous-sections (210a-b) rectilignes destinées à traverser un des deux orifices (316) et des sous-sections (210c-e) courbes destinées à être à l'extérieur des orifices (316) et reliant entre elles les sections (202a-b) et sous-sections (210a-b) rectilignes, et
- pour chaque groupe comportant une section (202a-b) et chaque sous-section (210a-b) rectiligne qui traverse le même orifice (316), un système de blindage (250) comportant au moins une première bande (252a) et au moins une deuxième bande (252b) réalisées dans un matériau électriquement supraconducteur, où une première première bande (252a) est accolée contre la section (202a) ou la sous-section (210a) rectiligne de la bobine (220) qui est la plus à l'extérieur, où une première deuxième bande (252b) est accolée contre la section (202b) ou la sous-section (210b) rectiligne de la bobine (220) qui est la plus à l'intérieur de la bobine (220),
où chaque première extrémité (206a-b) est destinée à être électriquement connectée à une source d'alimentation électrique,
où chaque ruban (204) est constitué d'un matériau supraconducteur,
où deux rubans (204) successifs dans l'empilement sont électriquement isolés l'un de l'autre, et
où chaque bande (252a-b) qui est accolée à un ruban (204) de la bobine (220) est électriquement isolée dudit ruban (204).

2. Système de bobine (120) selon la revendication 1, **caractérisé en ce qu'**il y a plusieurs premières bandes (252a) et **en ce que** lesdites premières bandes (252a) sont accolées les unes contre les autres de manière à former un empilement qui s'étend vers l'extérieur de la bobine (220).

3. Système de bobine (120) selon l'une des revendications 1 ou 2, **caractérisé en ce qu'**il y a plusieurs deuxièmes bandes (252b), et **en ce que** lesdites deuxièmes bandes (252b) sont accolées les unes contre les autres de manière à former un empilement qui s'étend vers l'intérieur de la bobine (220).

4. Système de bobine (120) selon l'une des revendications 2 ou 3, **caractérisé en ce que** deux bandes (252a-b) accolées l'une à l'autre, sont électriquement isolées l'une de l'autre.

5. Système de bobine (120) selon l'une des revendications 1 à 4, **caractérisé en ce que** la bobine (220) et chaque système de blindage (250) sont noyés dans une résine solide.

6. Moteur supraconducteur (300) comportant :
- un rotor (302) avec un cœur de rotor (304) portant des aimants permanents (310) et mobile en rotation autour d'un axe longitudinal (X),
- un stator (312) disposé à l'extérieur du rotor (302) et comportant un cœur de stator (314) traversé par plusieurs paires d'un premier et d'un deuxième orifices (316) répartis angulairement et régulièrement autour du rotor (102), et
- pour chaque paire d'orifices (316), un système de bobine (120) selon l'une des revendications précédentes.

7. Procédé de fabrication d'un système de bobine (120) selon la revendication 1, ledit procédé de fabrication comportant :
- une première étape de fourniture au cours de laquelle un ensemble de plusieurs rubans (204) empilés les uns sur les autres est fourni,
- une étape d'enroulement au cours de laquelle l'ensemble de rubans (204) ainsi fourni est enroulé sur un mandrin pour former la bobine (220),
- une étape de retrait au cours de laquelle la bobine (220) est retirée du mandrin,
- une première étape de consolidation au cours de laquelle la bobine (220) est imprégnée d'une résine qui se solidifie,
- une deuxième étape de fourniture au cours de laquelle deux systèmes de blindage (250) sont fournis,
- une étape de mise en place au cours de laquelle chaque système de blindage (250) est mis en place par rapport à la bobine (220), et
- une deuxième étape de consolidation au cours de laquelle la bobine (220) et les systèmes de blindage (250) ainsi mis en place sont imprégnés d'une résine.

## Patentansprüche

1. Spulensystem (120) für einen supraleitenden Motor (300), der eine erste und eine zweite Öffnung (316) umfasst, wobei das Spulensystem (120) umfasst:
- eine Spule (220), die aus mehreren Bändern (204) besteht, die übereinandergestapelt sind und so gewickelt sind, dass sie einen geraden ersten Abschnitt (202a) bilden, der dazu bestimmt ist, die erste Öffnung (316) zu durchqueren, und ein erstes Ende (206a) und ein zweites Ende (208a) aufweist, einen geraden zweiten Abschnitt (202b), der dazu bestimmt ist, die zweite Öffnung (316) zu durchqueren, und ein erstes Ende (206b) und ein zweites Ende (208b) aufweist, und eine Wicklung (210) aus mindestens einer Windung, welche die zweiten Enden (208a-b) miteinander verbindet und gerade Teilabschnitte (210a-b), die dazu bestimmt sind, eine der zwei Öffnungen (316) zu durchqueren, und gekrümmte Teilabschnitte (210c-e), die dazu bestimmt sind, sich außerhalb der Öffnungen (316) zu befinden, und die Abschnitte (202a-b) und geraden Teilabschnitte (210a-b) miteinander verbinden, umfasst, und
- für jede Gruppe, die einen Abschnitt (202a-b) und jeden geraden Teilabschnitt (210a-b), der dieselbe Öffnung (316) durchquert, umfasst, ein Abschirmsystem (250), das mindestens ein erstes Band (252a) und mindestens ein zweites Band (252b) umfasst, die aus einem elektrisch supraleitenden Material hergestellt sind, wobei ein erstes erstes Band (252a) an den Abschnitt (202a) oder den geraden Teilabschnitt (210a) der Spule (220) angefügt ist, der sich am weitesten außen befindet, wobei ein erstes zweites Band (252b) an den Abschnitt (202b) oder den geraden Teilabschnitt (210b) der Spule (220) angefügt ist, der sich am weitesten im Inneren der Spule (220) befindet,
wobei jedes erste Ende (206a-b) dazu bestimmt ist, mit einer elektrischen Stromquelle elektrisch verbunden zu werden,
wobei jedes Band (204) aus einem supraleitenden Material besteht,
wobei zwei aufeinander folgende Bänder (204) in dem Stapel elektrisch voneinander isoliert sind, und
wobei jedes Band (252a-b), das an ein Band (204) der Spule (220) angefügt ist, von diesem Band (204) elektrisch isoliert ist.

2. Spulensystem (120) nach Anspruch 1, **dadurch gekennzeichnet, dass** mehrere erste Bänder (252a) vorhanden sind, und dadurch, dass die ersten Bänder (252a) so aneinander angefügt sind, dass sie einen Stapel bilden, der sich von der Spule (220) nach außen erstreckt.

3. Spulensystem (120) nach einem der Ansprüche 1 oder 2, **dadurch gekennzeichnet, dass** mehrere zweite Bänder (252b) vorhanden sind, und dadurch, dass die zweiten Bänder (252b) so aneinander angefügt sind, dass sie einen Stapel bilden, der sich zum Inneren der Spule hin (220) erstreckt.

4. Spulensystem (120) nach einem der Ansprüche 2 oder 3, **dadurch gekennzeichnet, dass** zwei Bänder (252a-b), die aneinander angefügt sind, voneinander elektrisch isoliert sind.

5. Spulensystem (120) nach einem der Ansprüche 1 bis 4, **dadurch gekennzeichnet, dass** die Spule (220) und jedes Abschirmsystem (250) in ein Festharz eingebettet sind.

6. Supraleitender Motor (300), welcher umfasst:
- einen Rotor (302) mit einem Rotorkern (304), der Permanentmagnete (310) trägt und drehbeweglich um eine Längsachse (X) ist,
- einen Stator (312), der außerhalb des Rotors (302) angeordnet ist und einen Statorkern (314) umfasst, der von mehreren Paaren aus einer ersten und einer zweiten Öffnung (316) durchquert wird, die winkelmäßig und gleichmäßig um den Rotor (102) herum verteilt sind, und
- für jedes Paar von Öffnungen (316) ein Spulensystem (120) nach einem der vorhergehenden Ansprüche.

7. Verfahren zur Herstellung eines Spulensystems (120) nach Anspruch 1, wobei das Herstellungsverfahren umfasst:
- einen ersten Schritt der Bereitstellung, in dem eine Anordnung von mehreren übereinandergestapelten Bändern (204) bereitgestellt wird,
- einen Schritt der Wicklung, in dem die so bereitgestellte Anordnung von Bändern (204) auf einen Dorn gewickelt wird, um die Spule (220) zu bilden,
- einen Schritt des Abziehens, in dem die Spule (220) von dem Dorn abgezogen wird,
- einen ersten Schritt der Verfestigung, in dem die Spule (220) mit einem Harz getränkt wird, das sich verfestigt,
- einen zweiten Schritt der Bereitstellung, in dem zwei Abschirmsysteme (250) bereitgestellt werden,
- einen Schritt der Anbringung, in dem jedes Abschirmsystem (250) bezüglich der Spule (220) angebracht wird, und
einen zweiten Schritt der Verfestigung, in dem die Spule (220) und die so angebrachten Abschirmsysteme (250) mit einem Harz getränkt werden.

## Claims

1. Coil system (120) for a superconducting motor (300) comprising first and second apertures (316), said coil system (120) comprising:
- a coil (220) formed from several strips (204) stacked on each other and wound in such a way as to form a first straight section (202a) intended to pass through the first aperture (316) and having a first end (206a) and a second end (208a), a second straight section (202b) intended to pass through the second aperture (316) and having a first end (206b) and a second end (208b), and a winding (210) of at least one turn linking the second ends (208a-b) together and comprising straight sub-sections (210a-b) intended to pass through one of the two apertures (316) and curved sub-sections (210c-e) intended to be outside the apertures (316) and linking the straight sections (202a-b) and sub-sections (210a-b) together, and
- for each group comprising a section (202a-b) and each straight sub-section (210a-b) that passes through the same aperture (316), a shielding system (250) comprising at least one first band (252a) and at least one second band (252b) made from an electrically superconducting material, in which a first first band (252a) is placed against the section (202a) or the straight sub-section (210a) of the coil (220) which is the outermost, in which a first second band (252b) is placed against the section (202b) or straight sub-section (210b) of the coil (220) which is the innermost of the coil (220),
in which each first end (206a-b) is intended to be electrically connected to an electrical power source,
in which each strip (204) is formed from a superconducting material,
in which two successive strips (204) in the stack are electrically insulated from each other, and
in which each band (252a-b) that is placed next to a strip (204) of the coil (220) is electrically insulated from said strip (204).

2. Coil system (120) according to Claim 1, **characterized in that** there are several first bands (252a) and **in that** said first bands (252a) are placed against each other in such a way as to form a stack that extends towards the outside of the coil (220).

3. Coil system (120) according to either of Claims 1 and 2, **characterized in that** there are several second bands (252b), and **in that** said second bands (252b) are placed against each other in such a way as to form a stack that extends towards the inside of the coil (220).

4. Coil system (120) according to either of Claims 2 and 3, **characterized in that** two bands (252a-b) placed next to each other are electrically insulated from each other.

5. Coil system (120) according to one of Claims 1 to 4, **characterized in that** the coil (220) and each shielding system (250) are embedded in a solid resin.

6. Superconducting motor (300) comprising:
- a rotor (302) with a rotor core (304) carrying permanent magnets (310) that are able to rotate about a longitudinal axis (X),
- a stator (312) arranged outside the rotor (302) and comprising a stator core (314) traversed by several pairs of first and second apertures (316) distributed at regular angular intervals around the rotor (102), and
- for each pair of apertures (316), a coil system (120) according to one of the preceding claims.

7. Method for manufacturing a coil system (120) according to Claim 1, said manufacturing method comprising:
- a first provision step during which an assembly of several strips (204) stacked on each other is provided,
- a winding step during which the assembly of strips (204) thus provided is wound onto a mandrel to form the coil (220),
- a removal step during which the coil (220) is removed from the mandrel,
- a first reinforcement step during which the coil (220) is impregnated with a resin that solidifies,
- a second provision step during which two shielding systems (250) are provided,
- a positioning step during which each shielding system (250) is positioned relative to the coil (220), and
- a second reinforcement step during which the coil (220) and the shielding systems (250) thus positioned are impregnated with a resin.
